# EUROPEAN PATENT SPECIFICATION

(11) **EP 1 934 573 B1**
(45) Date of publication and mention of the grant of the patent: **13.03.2019**
(21) Application number: 06792146.0
(22) Date of filing: 19.09.2006
(51) Int. Cl.: G01M 11/02

(54) **OPTICAL INSPECTION SYSTEM**
OPTISCHES UNTERSUCHUNGSSYSTEM
SYSTEME D'INSPECTION OPTIQUE

(30) Priority: 21.09.2005 US 719006 P; 16.11.2005 US 737168 P
(43) Date of publication of application: 25.06.2008
(73) Proprietor: Novartis AG, 4056 Basel (CH)
(72) Inventor: CHIANG, David Shiao-Tsing, Roswell, GA 30201 (US); RUSSELL, Todd Aldridge, Grayson, GA 30017 (US); TAN, Wei, Marietta, GA 30067 (US)
(74) Representative: Bohest AG
(86) International application number: PCT/EP2006/009102
(87) International publication number: WO 2007/039100

(56) References cited:
- WO-A-2004/097715
- WO-A-2005/054807
- GB-A- 2 153 552
- US-A- 5 847 819
- US-A- 6 148 097

## Description

The present invention relates to an optical system that allows accurate projection and inspection of a curved surface onto a flat plane. The present invention may be used to prevent or mitigate inspection errors caused by particulate matter.

Cameras and vision systems are often used in inspection systems, particularly to inspect for defects. However, conventional camera lenses may not be accurate and or/adequate for inspecting curved surfaces because, typically, in an inspection system, the object of the image is projected onto a flat CCD image plane. A technique used to correct this problem is to increase the depth of field of the conventional camera lens by reducing the size of the aperture.

In specific applications, such as for example, contact lens inspection, reducing the size of the aperture introduces additional difficulties. The significant curvature of a contact lens (sagittal height of about 3.5mm and 14 mm diameter) prevents uniform focus across the surface of the lens. Additionally, for items, such as contact lenses, that float in a liquid solution, when the depth of field is adjusted to capture a 3.5 mm depth, the floating debris in solution is also brought into focus, making inspection techniques inaccurate.

GB 2 153 552 A discloses an optical inspection system according to the preamble of claim 1.

The present invention seeks to solve the problems listed herein by providing an optical system to improve the ability to inspect defects on curved surfaces. A particular embodiment includes an optical system that is capable of inspecting defects on the surfaces and sides of contact lenses.

The present invention provides a method for improving inspection resolution by providing a series of optical elements to narrow the depth of field of a digital camera along a specific curved surface. The specific curved surface, in some embodiments, may be a contact lens. The image of the curved surface is projected onto a flat plane of a digital camera, preferably a flat CCD plane. A plurality (a series) of optical elements is used; the adjustable properties of such elements may include glass type, spacing between the elements, diameter of the elements, and the thickness of the elements. According to the invention, a series of seven optical elements is used. The front surface radius of the first optical element is about 51.9mm; the back surface radius of the first optical element is about -32.0mm; the front surface radius of the second optical element is about 98.4mm; the back surface radius of the second optical element is about -15.8mm; the front surface radius of the third optical element is -15.8mm; the back surface radius of said third optical element is about -29.9mm; the front surface radius of the fourth optical element is about 40.5mm; the back surface radius of the fourth optical element is about 11.1mm; the front surface radius of the fifth optical element is about 11.1mm; the back surface radius of the fifth optical element is about -58.1mm; the front surface radius of the optical sixth element is about 23.5mm; the back surface radius of the sixth optical element is about -13.5mm; the front surface radius of the seventh optical element is about -13.5mm; and the back surface radius of said seventh optical element is about - 16.9mm.

The optical elements of the present invention may be made of FK3 type glass or SFL6 type glass.

The spacing between the back of the first optical element and the front of the second optical element may be about 0.5mm; the spacing between the back of the second optical element and the front of the third optical element may be about 0.0mm; the spacing between the back of the third optical element and the front of the fourth optical element may be about 18.3mm; the spacing between the back of the fourth optical element and the front of the fifth optical element may be about 0.0mm; the spacing between the back of the fifth optical element and the front of the sixth optical element may be about 1.9mm; and the spacing between the back of the sixth optical element and the front of the seventh optical element may be about 0.0mm. The thickness of the first optical element may be about 3mm; the thickness of the second optical element may be about 4mm; the thickness of the third optical element may be about 1.7mm; the thickness of the fourth optical element may be about 2mm; the thickness of the fifth optical element may be about 6.7mm; the thickness of the sixth optical element may be about8.5mm; and the thickness of the seventh optical element may be about 2mm.

### DESCRIPTION OF THE DRAWINGS

FIG. 1 illustrates a side view of an optical system of the present invention.
FIG. 2 shows a housing used in conjunction with the present invention.

The present invention seeks to improve the quality of images taken of curved objects that must be projected onto a flat plane of a digital camera, such as a charge-coupled device (CCD) image plane, and hence improve the inspection of curved objects. The present invention allows the camera lens to use a wide open aperture by narrowing the depth of field.

The depth of field defines the zone in which all elements show clearly from foreground to background. The depth of field in an image is controlled by three factors: the distance to the subject, the focal length, and the aperture used to capture the image. It is necessary to understand that the term depth of field defines a somewhat "elastic" concept: acceptable sharpness. The perception of sharpness can differ from one individual to another, and when the expression "depth of field" is used, it really denotes that area in an image that exhibits a sufficient sharpness to be considered more or less in focus for a particular application. The depth of field doesn't have to be one of precise sharpness, but instead that portion of the image in which things remain recognizable for what they are and for their intended purpose. For example, in an inspection system the sharpness must be such that any possible defects, if present, are clear.

For digital cameras, depth of field is a subject of special interest because depth of field is more difficult to control than earlier film cameras. In digital cameras, such as CCD cameras, incoming light is received by a piece of silicon called a charge-coupled device (CCD). This silicon wafer is a solid-state electronic component which has been micro-manufactured and segmented into an array of individual light-sensitive cells that are referred to as pixels. The small imaging sensors of compact cameras require the use of short focal lengths, and this in turn gives these cameras an unusually long depth of field when compared to 35mm cameras. Thus, intentionally getting a shallow depth of field is more difficult.

As a rule, depth of field decreases as the subject gets closer to the camera; meaning that as the point of focus gets closer to the lens, the possible extent of the depth of field diminishes. On the other hand, if the subject is far enough away from the camera - and for compact digital cameras, this need not be very far - the depth of field extends out to infinity.

In the present invention, the point of focus is preferably closer to the camera lens. In an exemplary inspection system, such as that used for a contact lens, the contact lens to be inspected is preferably about 35 to 55 mm from the camera in order to bring the defects such as tears or gaps into focus. Other distances, however, may be used with different configurations of the optical and inspection systems. Obtaining a sharp image of the curved surface is accomplished in the present invention by using a system of optical elements to project the image of the contact lens onto a CCD image sensor. The present invention allows improved inspection by narrowing the depth of field according to the curvature of a curved surface using one or more optical elements. In a typical contact lens inspection system, however, the contact lens is in a wet cell or saline solution. Oftentimes, particulate matter may be present in the wet cell. Hence, automatic focus of a digital camera used in inspection may inadvertently include or focus upon such particulate matter. In effect, narrowing the depth of field according to the curvature allows the camera to see a thin curved "slice" of focus that prevents measurements that include particulate matter

The optical system includes seven optical elements. Each optical element has a front and back surface radius measured in mm. Additionally, each optical element has a diameter. The optical elements are preferably made from glass, specifically FK3 or SFL6 type glass.

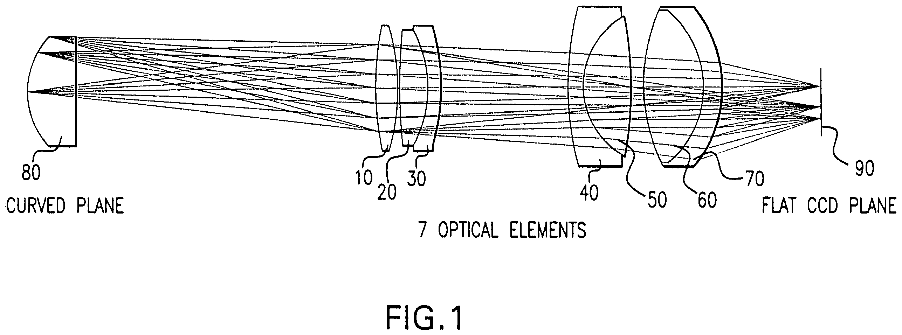

In the present invention, as depicted in FIG. 1, the system of seven optical elements is physically placed between the curved surface or plane 80 to be imaged and a flat CCD plane 90. A first optical element 10, a second optical element 20, a third optical element 30, a fourth optical element 40, a fifth optical element 50, a sixth optical element 60, and a seventh optical element 70.One specific embodiment of the present invention includes the radii, spacing, and diameters in the chart below. The term "spacing" is defined as the distance between the back of that optical element and the front of the next optical element.

| Optical Element | Front Surface Radius | Back Surface Radius | Thickness | Diameter | Spacing |
|---|---|---|---|---|---|
| 1 | 51.9mm | -32.0mm | 3mm | 16mm | 0.5mm |
| 2 | 98.4mm | -15.8mm | 4mm | 16mm | 0.0mm |
| 3 | -15.8mm | -29.9mm | 1.7mm | 17.2mm | 18.3mm |
| 4 | 40.5mm | 11.1mm | 2mm | 19.2mm | 0.0mm |
| 5 | 11.1mm | -58.1mm | 6.7mm | 19.2mm | 1.9mm |
| 6 | 23.5mm | -13.5mm | 8.5mm | 21.0mm | 0.0mm |
| 7 | -13.5mm | -16.9mm | 2mm | 22.0mm | N/A |

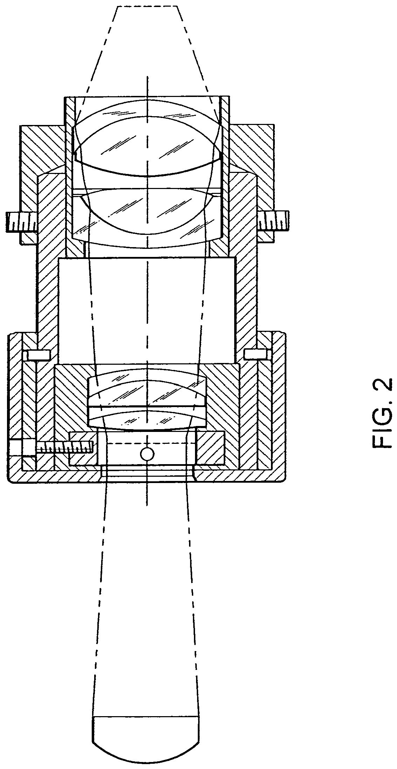

This optical system is preferably contained in a housing as depicted in FIG. 2. The housing preferably has a mechanism that can finely adjust the distance between the seventh optical element 70 and the CCD plane 90 for focusing purposes. It may also have an adjustable aperture to control the amount of light that passes through the optical system to control the image intensity and the depth of field.

## Claims

1. A method for improving inspection resolution comprising
providing a camera having a flat plane (90);
providing a specific curved surface (80);
providing a series of optical elements (10, 20, 30, 40, 50, 60, 70) and placing the series of optical elements between the specific curved surface (80) and the flat plane (90) of the camera;
projecting an image of the specific curved surface (80) onto the flat plane (90) of the camera;
**characterized in that**
the step of providing a camera having a flat plane (90) comprises providing a digital camera, and the step of providing a series of optical elements comprises providing a series of optical elements which narrows the depth of field of the digital camera along the specific curved surface,
wherein the step of providing the series of optical elements (10, 20, 30, 40, 50, 60, 70) comprises providing a series of seven optical elements, wherein:
a front surface radius of a first optical element (10) of the series of seven optical elements is about 51.9mm;
a back surface radius of the first optical element (10) of the series of seven optical elements is about -32.0mm;
a front surface radius of a second optical element (20) of the series of seven optical elements is about 98.4mm;
a back surface radius of the second optical element (20) of the series of seven optical elements is about -15.8mm;
a front surface radius of a third optical element (30) of the series of seven optical elements is about -15.8mm;
a back surface radius of the third optical element (30) of the series of seven optical elements is about -29.9mm;
a front surface radius of a fourth optical element (40)of the series of seven optical elements is about 40.5mm;
a back surface radius of the fourth optical element (40) of the series of seven optical elements is about 11.1 mm;
a front surface radius of a fifth optical element (50) of the series of seven optical elements is about 11.1 mm;
a back surface radius of the fifth optical element (50) of the series of seven optical elements is about -58.1mm;
a front surface radius of a sixth optical element (60) of the series of seven optical elements is about 23.5mm;
a back surface radius of the sixth optical element (60) of the series of seven optical elements is about -13.5mm;
a front surface radius of a seventh optical element (70) of the series of seven optical elements is about -13.5mm; and
a back surface radius of the seventh optical element (70) of the series of seven optical elements is about -16.9mm.

2. The method of claim 1, wherein the flat plane (90) of the digital camera is a flat CCD plane and wherein an image of the specific curved surface is recorded and projected onto the flat CCD plane.

3. The method of claim 1 or claim 2, wherein the step of providing the series of optical elements (10, 20, 30, 40, 50, 60, 70) comprises providing a series of optical elements made from a material selected from the group consisting of: FK3 type glass and SFL6 type glass.

4. The method of any one of the preceding claims, wherein in the step of providing the series of seven optical elements (10, 20, 30, 40, 50, 60, 70):
a spacing between a back of the first optical element (10) and a front of the second optical element (20) is about 0.5mm;
a spacing between a back of the second optical element (20) and a front of the third optical element (30) is about 0.0mm;
a spacing between a back of the third optical element (30) and a front of the fourth optical element (40) is about 18.3mm;
a spacing between a back of the fourth optical element (40) and a front of the fifth optical element (50) is about 0.0mm;
a spacing between a back of the fifth optical element (50) and a front of the sixth optical element (60) is about 1.9mm; and
a spacing between a back of the sixth optical element (60) and a front of the seventh optical element (70) is about 0.0mm.

5. The method of any one of the preceding claims,
wherein in the step of providing the series of seven optical elements:
a diameter of the first optical element (10) is about 16.0mm;
a diameter of the second optical element (20) is about 16.0mm;
a diameter of the third optical element (30) is about 17.2mm;
a diameter of the fourth optical element (40) is about 19.2mm;
a diameter of the fifth optical element (50) is about 19.2mm;
a diameter of the sixth optical element (60) is about 21.0mm;
and a diameter of the seventh optical element (70) is about 22.0mm.

6. The method of any one of the preceding claims,
wherein in the step of providing a series of seven optical elements (10, 20, 30, 40, 50, 60, 70):
a thickness of the first optical element (10) is about 3mm;
a thickness of the second optical element (20) is about 4mm;
a thickness of the third optical element (30) is about 1.7mm;
a thickness of the fourth optical element (40) is about 2mm;
a thickness of the fifth optical element (50) is about 6.7mm;
a thickness of the sixth optical element (60) is about 8.5mm; and
a thickness of the seventh optical element (70) is about 2mm.

7. The method of any one of the preceding claims,
wherein the step of providing the specific curved surface (80) comprises providing a contact lens having the specific curved surface.

## Patentansprüche

1. Verfahren zur Verbesserung der Auflösung einer Inspektion, umfassend:
Bereitstellen einer Kamera mit einer flachen Ebene (90) ;
Bereitstellen einer bestimmten gekrümmten Oberfläche (80);
Bereitstellen einer Reihe von optischen Elementen (10, 20, 30, 40, 50, 60, 70) und Platzieren der Reihe von optischen Elementen zwischen der bestimmten gekrümmten Oberfläche (80) und der flachen Ebene (90) der Kamera;
Projizieren eines Bildes der bestimmten gekrümmten Oberfläche (80) auf die flache Ebene (90) der Kamera;
**dadurch gekennzeichnet, dass**
der Schritt des Bereitstellens einer Kamera mit einer flachen Ebene (90) Bereitstellen einer Digitalkamera umfasst, und der Schritt des Bereitstellens einer Reihe von optischen Elementen Bereitstellen einer Reihe von optischen Elementen umfasst, die die Schärfentiefe des Felds der Digitalkamera entlang der bestimmten gekrümmten Oberfläche verringert,
wobei der Schritt des Bereitstellens der Reihe von optischen Elementen (10, 20, 30, 40, 50, 60, 70) Bereitstellen einer Reihe von sieben optischen Elementen umfasst, wobei:
ein Radius der vorderen Oberfläche eines ersten optischen Elements (10) der Reihe von sieben optischen Elementen etwa 51.9 mm beträgt;
ein Radius der hinteren Oberfläche des ersten optischen Elements (10) der Reihe von sieben optischen Elementen etwa -32.0 mm beträgt;
ein Radius der vorderen Oberfläche eines zweiten optischen Elements (20) der Reihe von sieben optischen Elementen etwa 98.4 mm beträgt;
ein Radius der hinteren Oberfläche des zweiten optischen Elements (20) der Reihe von sieben optischen Elementen etwa -15.8 mm beträgt;
ein Radius der vorderen Oberfläche eines dritten optischen Elements (30) der Reihe von sieben optischen Elementen etwa -15.8 mm beträgt;
ein Radius der hinteren Oberfläche des dritten optischen Elements (30) der Reihe von sieben optischen Elementen etwa -29.9 mm beträgt;
ein Radius der vorderen Oberfläche eines vierten optischen Elements (40) der Reihe von sieben optischen Elementen etwa 40.5 mm beträgt;
ein Radius der hinteren Oberfläche des vierten optischen Elements (40) der Reihe von sieben optischen Elementen etwa 11.1 mm beträgt;
ein Radius der vorderen Oberfläche eines fünften optischen Elements (50) der Reihe von sieben optischen Elementen etwa 11.1 mm beträgt;
ein Radius der hinteren Oberfläche des fünften optischen Elements (50) der Reihe von sieben optischen Elementen etwa -58.1 mm beträgt;
ein Radius der vorderen Oberfläche eines sechsten optischen Elements (60) der Reihe von sieben optischen Elementen etwa 23.5 mm beträgt;
ein Radius der hinteren Oberfläche des sechsten optischen Elements (60) der Reihe von sieben optischen Elementen etwa -13.5 mm beträgt;
ein Radius der vorderen Oberfläche eines siebten optischen Elements (70) der Reihe von sieben optischen Elementen etwa -13.5 mm beträgt; und
ein Radius der hinteren Oberfläche des siebten optischen Elements (70) der Reihe von sieben optischen Elementen etwa -16.9 mm beträgt.

2. Verfahren nach Anspruch 1, wobei die flache Ebene (90) der Digitalkamera eine flache CCD-Ebene ist, und wobei ein Bild der bestimmten gekrümmten Oberfläche aufgenommen und auf die flache CCD-Ebene projiziert wird.

3. Verfahren nach Anspruch 1 oder Anspruch 2, wobei der Schritt des Bereitstellens der Reihe von optischen Elementen (10, 20, 30, 40, 50, 60, 70) Bereitstellen einer Reihe von optischen Elementen umfasst, die aus einem Material gefertigt sind, das ausgewählt ist aus der Gruppe bestehend aus: Glas vom Typ FK3 und Glas vom Typ SFL6.

4. Verfahren nach einem der vorangehenden Ansprüche, wobei in dem Schritt des Bereitstellens der Reihe von sieben optischen Elementen (10, 20, 30, 40, 50, 60, 70) :
ein Abstand zwischen einer Rückseite des ersten optischen Elements (10) und einer Vorderseite des zweiten optischen Elements (20) etwa 0.5 mm beträgt;
ein Abstand zwischen einer Rückseite des zweiten optischen Elements (20) und einer Vorderseite des dritten optischen Elements (30) etwa 0.0 mm beträgt;
ein Abstand zwischen einer Rückseite des dritten optischen Elements (30) und einer Vorderseite des vierten optischen Elements (40) etwa 18.3 mm beträgt;
ein Abstand zwischen einer Rückseite des vierten optischen Elements (40) und einer Vorderseite des fünften optischen Elements (50) etwa 0.0 mm beträgt;
ein Abstand zwischen einer Rückseite des fünften optischen Elements (50) und einer Vorderseite des sechsten optischen Elements (60) etwa 1.9 mm beträgt; und
ein Abstand zwischen einer Rückseite des sechsten optischen Elements (60) und einer Vorderseite des siebten optischen Elements (70) etwa 0.0 mm beträgt.

5. Verfahren nach einem der vorhergehenden Ansprüche, wobei in dem Schritt des Bereitstellens der Reihe von sieben optischen Elementen:
ein Durchmesser des ersten optischen Elements (10) etwa 16.0 mm beträgt;
ein Durchmesser des zweiten optischen Elements (20) etwa 16.0 mm beträgt;
ein Durchmesser des dritten optischen Elements (30) etwa 17.2 mm beträgt;
ein Durchmesser des vierten optischen Elements (40) etwa 19.2 mm beträgt;
ein Durchmesser des fünften optischen Elements (50) etwa 19.2 mm beträgt;
ein Durchmesser des sechsten optischen Elements (60) etwa 21.0 mm beträgt; und
ein Durchmesser des siebten optischen Elements (70) etwa 22.0 mm beträgt.

6. Verfahren nach einem der vorhergehenden Ansprüche, wobei in dem Schritt des Bereitstellens einer Reihe von sieben optischen Elementen (10, 20, 30, 40, 50, 60, 70) :
eine Dicke des ersten optischen Elements (10) etwa 3 mm beträgt;
eine Dicke des zweiten optischen Elements (20) etwa 4 mm beträgt;
eine Dicke des dritten optischen Elements (30) etwa 1.7 mm beträgt;
eine Dicke des vierten optischen Elements (40) etwa 2 mm beträgt;
eine Dicke des fünften optischen Elements (50) etwa 6.7 mm beträgt;
eine Dicke des sechsten optischen Elements (60) etwa 8.5 mm beträgt; und
eine Dicke des siebten optischen Elements (70) etwa 2 mm beträgt.

7. Verfahren nach einem der vorangehenden Ansprüche, wobei der Schritt des Bereitstellens der bestimmten gekrümmten Oberfläche (80) Bereitstellen einer Kontaktlinse mit der bestimmten gekrümmten Oberfläche umfasst.

## Revendications

1. Procédé pour améliorer une résolution d'inspection consistant :
à fournir une caméra ayant un plan plat (90) ;
à fournir une surface incurvée spécifique (80) ;
à fournir une série d'éléments optiques (10, 20, 30, 40, 50, 60, 70) et à placer la série d'éléments optiques entre la surface incurvée spécifique (80) et le plan plat (90) de la caméra ;
à projeter une image de la surface incurvée spécifique (80) sur le plan plat (90) de la caméra ;
**caractérisé en ce que**
l'étape de fourniture d'une caméra ayant un plan plat (90) consiste à fournir une caméra numérique, et l'étape de fourniture d'une série d'éléments optiques consiste à fournir une série d'éléments optiques qui réduisent la profondeur de champ de la caméra numérique le long de la surface incurvée spécifique,
dans lequel l'étape de fourniture de la série d'éléments optiques (10, 20, 30, 40, 50, 60, 70) consiste à fournir une série de sept éléments optiques, dans lequel :
un rayon de surface avant d'un premier élément optique (10) de la série de sept éléments optiques fait environ 51.9 mm ;
un rayon de surface arrière du premier élément optique (10) de la série de sept éléments optiques fait environ -32.0 mm ;
un rayon de surface avant d'un deuxième élément optique (20) de la série de sept éléments optiques fait environ 98.4 mm ;
un rayon de surface arrière du deuxième élément optique (20) de la série de sept éléments optiques fait environ -15.8 mm ;
un rayon de surface avant d'un troisième élément optique (30) de la série de sept éléments optiques fait environ -15.8 mm ;
un rayon de surface arrière du troisième élément optique (30) de la série de sept éléments optiques fait environ -29.9 mm ;
un rayon de surface avant d'un quatrième élément optique (40) de la série de sept éléments optiques fait environ 40.5 mm ;
un rayon de surface arrière du quatrième élément optique (40) de la série de sept éléments optiques fait environ 11.1 mm ;
un rayon de surface avant d'un cinquième élément optique (50) de la série de sept éléments optiques fait environ 11.1 mm ;
un rayon de surface arrière du cinquième élément optique (50) de la série de sept éléments optiques fait environ -58.1 mm ;
un rayon de surface avant d'un sixième élément optique (60) de la série de sept éléments optiques fait environ 23.5 mm ;
un rayon de surface arrière du sixième élément optique (60) de la série de sept éléments optiques fait environ -13.5 mm ;
un rayon de surface avant d'un septième élément optique (70) de la série de sept éléments optiques fait environ -13.5 mm ; et
un rayon de surface arrière du septième élément optique (70) de la série de sept éléments optiques fait environ -16.9 mm.

2. Procédé selon la revendication 1, dans lequel le plan plat (90) de la caméra numérique est un plan CCD plat et dans lequel une image de la surface incurvée spécifique est prise et projetée sur le plan CCD plat.

3. Procédé selon la revendication 1 ou la revendication 2, dans lequel l'étape de fourniture de la série d'éléments optiques (10, 20, 30, 40, 50, 60, 70) consiste à fournir une série d'éléments optiques réalisés en un matériau sélectionné dans le groupe constitué par : un verre de type FK3 et un verre de type SFL6.

4. Procédé selon l'une quelconque des revendications précédentes, dans lequel, à l'étape de fourniture de la série de sept éléments optiques (10, 20, 30, 40, 50, 60, 70) :
un espacement entre l'arrière du premier élément optique (10) et l'avant du deuxième élément optique (20) fait environ 0.5 mm ;
un espacement entre l'arrière du deuxième élément optique (20) et l'avant du troisième élément optique (30) fait environ 0.0 mm ;
un espacement entre l'arrière du troisième élément optique (30) et l'avant du quatrième élément optique (40) fait environ 18.3 mm ;
un espacement entre l'arrière du quatrième élément optique (40) et l'avant du cinquième élément optique (50) fait environ 0.0 mm ;
un espacement entre l'arrière du cinquième élément optique (50) et l'avant du sixième élément optique (60) fait environ 1.9 mm ; et
un espacement entre l'arrière du sixième élément optique (60) et l'avant du septième élément optique (70) fait environ 0.0 mm.

5. Procédé selon l'une quelconque des revendications précédentes, dans lequel, à l'étape de fourniture de la série de sept éléments optiques :
un diamètre du premier élément optique (10) fait environ 16.0 mm ;
un diamètre du deuxième élément optique (20) fait environ 16.0 mm ;
un diamètre du troisième élément optique (30) fait environ 17.2 mm ;
un diamètre du quatrième élément optique (40) fait environ 19.2 mm ;
un diamètre du cinquième élément optique (50) fait environ 19.2 mm ;
un diamètre du sixième élément optique (60) fait environ 21.0 mm ;
et un diamètre du septième élément optique (70) fait environ 22.0 mm.

6. Procédé selon l'une quelconque des revendications précédentes, dans lequel, à l'étape de fourniture d'une série de sept éléments optiques (10, 20, 30, 40, 50, 60, 70) :
une épaisseur du premier élément optique (10) fait environ 3 mm ;
une épaisseur du deuxième élément optique (20) fait environ 4 mm ;
une épaisseur du troisième élément optique (30) fait environ 1.7 mm ;
une épaisseur du quatrième élément optique (40) fait environ 2 mm ;
une épaisseur du cinquième élément optique (50) fait environ 6.7 mm ;
une épaisseur du sixième élément optique (60) fait environ 8.5 mm ; et
une épaisseur du septième élément optique (70) fait environ 2 mm.

7. Procédé selon l'une quelconque des revendications précédentes, dans lequel l'étape de fourniture de la surface incurvée spécifique (80) consiste à fournir une lentille de contact ayant la surface incurvée spécifique.
